# EUROPÄISCHE PATENTSCHRIFT

(11) **EP 2 758 682 B1**
(45) Veröffentlichungstag und Bekanntmachung des Hinweises auf die Patenterteilung: **14.09.2016**
(21) Anmeldenummer: 12735456.1
(22) Anmeldetag: 09.07.2012
(51) Int. Cl.: F16D 1/068

(54) **ANORDNUNG MIT EINER WELLE-NABE-VERBINDUNG UND VERFAHREN ZUM KLEBEVERBINDEN EINER NABE MIT EINER WELLE**
ARRANGEMENT WITH A SHAFT-HUB CONNECTION AND METHOD FOR THE ADHESIVE CONNECTION OF A HUB TO A SHAFT
DISPOSITIF COMPRENANT UNE LIAISON ARBRE-MOYEU ET PROCÉDÉ DE LIAISON PAR COLLAGE D'UN MOYEU À UN ARBRE

(30) Priorität: 22.09.2011 DE 102011113876
(43) Veröffentlichungstag der Anmeldung: 30.07.2014
(73) Patentinhaber: Sew-Eurodrive GmbH & Co. KG, 76646 Bruchsal (DE)
(72) Erfinder: ÖZCAN, Abdulvahap, 68753 Waghäusel (DE)
(74) Vertreter: Tüngler, Eberhard
(86) Internationale Anmeldenummer: PCT/EP2012/002879
(87) Internationale Veröffentlichungsnummer: WO 2013/041162

(56) Entgegenhaltungen:
- EP-A2- 1 553 311
- DE-A1- 19 520 065
- DE-A1- 19 609 430
- DE-U- 1 963 212
- US-A- 5 160 688
- US-A- 5 228 720

## Beschreibung

Die Erfindung betrifft eine Anordnung mit einer Welle-Nabe-Verbindung und ein Verfahren zum Klebeverbinden einer Nabe mit einer Welle.

Kraftschlüssig ausgeführte Welle-Nabe-Verbindungen sind allgemein bekannt. Dabei werden beim Verbinden hohe Kräfte in die Nabe eingeleitet.

**Aus der** DE 19 63 212 U **ist eine Anordnung zur kraftschlüssigen Verbindung von Nabe und Welle bekannt.**

**Aus der** EP 1 553 311 A2 **ist ein Verfahren zur Erstellung einer Steckverbindung mittels Klebstoffinjektion sowie ein Einsteckelement und hohles Fügeteil hierfür bekannt.**

Der Erfindung liegt daher die Aufgabe zugrunde, eine die Verbindungspartner schonende Welle-Nabe-Verbindung weiterzubilden.

Erfindungsgemäß wird die Aufgabe bei der Anordnung mit einer Welle-Nabe-Verbindung nach den in Anspruch 1 und bei dem Verfahren zum Klebeverbinden einer Nabe mit einer Welle
angegebenen Merkmalen gelöst.

Wichtige Merkmale der Erfindung bei der Anordnung mit einer Welle-Nabe-Verbindung sind, dass die Nabe auf einen zylindrischen Abschnitt der Welle in Wellenachsrichtung aufgeschoben ist,
**wobei** die Nabe in Wellenachsrichtung sich erstreckende Nuten aufweist,
insbesondere so dass die Nuten, insbesondere in radialer Richtung und/oder in Umfangsrichtung, begrenzt sind von dem Wellenabschnitt und dem Blechpaket,
wobei eine Verteilereinheit auf den Wellenabschnitt aufgeschoben ist und einen Hohlraum, insbesondere einen ringförmigen Hohlraum, zumindest teilweise begrenzt,
insbesondere wobei der Hohlraum durch den Wellenabschnitt, die Nabe, insbesondere die Stirnseite der Nabe, und die Verteilereinheit begrenzt ist,
wobei die Nuten in den Hohlraum münden,
wobei die Verteilereinheit mit der Nabe dicht verbunden ist.

Von Vorteil ist dabei, dass der in den Hohlraum eingespritzte Klebstoff sich zunächst in diesem ohne besonderen Strömungswiderstand verteilt und von dem Hohlraum ausgehend in die Nuten hineingedrängt wird, wodurch die Nuten gleichmäßig mit Klebstoff beaufschlagt werden, wenn die Nuten gleichartig oder zumindest mit gleicher Querschnittsfläche ausgeführt sind. Somit ist vorteiligerweise beim Herstellen der Welle-Nabe-Verbinden eine für die Nabe im Wesentlichen kraftfreie Verbindung der Nabe mit der Welle ermöglicht. Des Weiteren ist durch die gleichmäßige Klebstoffverteilung eine qualitativ gute Verbindung ausführbar.

Erfindungsgemäß münden die Nuten an ihrem anderen Ende in die Umgebungsluft. Von Vorteil ist dabei, dass der Klebstoff im Hohlraum einem hohen Druck ausgesetzt ist und innerhalb der Nuten ein Druckgefälle entsteht bis zum anderen Ende hin. Dabei wird infolge der im Wesentlichen gleichartigen Ausführung der Nuten dasselbe Druckgefälle erzeugt und somit ein gleichmäßiges Befüllen der Nuten erreicht.

Erfindungsgemäß weist die Verteilereinheit eine Dichtlippe auf, welche zur dichten Verbindung mit der Nabe diese berührt, insbesondere an deren Stirnseite. Von Vorteil ist dabei, dass eine Abdichtung in einfacher und kostengünstiger Weise erzeugbar ist. Insbesondere ist ein geringer Anpressdruck beim Andrücken der Verteilereinheit in axialer Richtung auf die Nabe hin ausreichend, um einen dichte Verbindung zu erzeugen.

### Die Abdichtung zur Welle hin wird mittels Presspassung erzeugt.

Bei einer vorteilhaften Ausgestaltung ist die Nabe ein, insbesondere aus Einzelblechstücken zusammengesetztes, stanzpaketiertes, schweißverbundenes oder formschlüssig verbundenes, Blechpaket. Von Vorteil ist dabei, dass die Nabe einfach herstellbar ist, insbesondere mittels Stanzen oder Feinschneiden, und wegen der Klebeverbindung keine wesentlichen Kräfte beim Herstellen der Welle-Nabe-Verbindung auf die Nabe wirken.

Erfindungsgemäß weist die Verteilereinheit einen in den Hohlraum mündenden Einlasskanal auf,
in welchen eine Kanüle oder ein Auslassrohr einer Klebstoff-Einspritzvorrichtung einführbar ist,
wobei der Einlasskanal sich in radialer Richtung erstreckt und/oder wobei der Einlasskanal mit seinem anderen Ende in der Umgebung mündet. Von Vorteil ist dabei, dass mittels der Kanüle oder des Auslassrohrs der Klebstoff mit einem hohen Druck beaufschlagbar ist. Somit ist auch ein hoch viskoser Klebstoff verwendbar und gleichmäßig in enge Nuten hineindrückbar.

Bei einer vorteilhaften Ausgestaltung ist die Verteilereinheit aus einem derart elastischen Material gefertigt, so dass sich das elastische Material an die eingeführte Kanüle oder das eingeführte Auslassrohr anlehnt und somit abdichtet
und/oder dass die Kanüle oder das ein Auslassrohr einer Klebstoff-Einspritzvorrichtung kraftschlüssig dicht verbunden eingeführt ist in den Einlasskanal. Von Vorteil ist dabei, dass die dichte Verbindung ohne zusätzliche Teile erreichbar ist. Schon die elastische Verformung des Materials der Verteilereinheit reicht aus, um die Abdichtung herzustellen.

Bei einer vorteilhaften Ausgestaltung ist die Verteilereinheit aus einem thermoplastischen Elastomer gefertigt. Von Vorteil ist dabei, dass eine kostengünstige und einfache Herstellung der Verteilereinheit als Kunststoffspritzgussteil ausführbar ist.

Bei einer vorteilhaften Ausgestaltung ist die Welle eine Rotorwelle. Von Vorteil ist dabei, dass das Blechpaket als Nabe auf die Rotorwelle, also beispielsweise ein Vollwellenstahlteil, aufschiebbar ist mit ihrer mittigen Aufnahmeausnehmung. Somit ist das Blechpaket aus dünnen Blechteilen zusammensetzbar. Trotz der leichten Verformbarkeit des Blechteils wird dieses beim Herstellen der Verbindung nicht verformt, da die Verbindung im Wesentlichen kraftfrei erfolgt.

Bei einer vorteilhaften Ausgestaltung weist das Blechpaket an seinem Umfang ebene oder bogenförmige Flächenabschnitte auf, an denen Dauermagnete angeordnet sind, insbesondere stoffschlüssig und/oder formschlüssig mit dem Blechpaket verbundene Dauermagnete. Von Vorteil ist dabei, dass die Erfindung bei einem Synchronmotor anwendbar ist und die Dauermagnete in einfacher Weise verbindbar sind.

Bei einer vorteilhaften Ausgestaltung weisen die Nuten einen kreisbogenförmigen Querschnitt auf. Von Vorteil ist dabei, dass die Nutwandung in einfacher Weise als Kreisbogenabschnitt fertigbar ist. Alternativ ist auch ein anderer gekrümmter Verlauf, wie Ellipsenbogenabschnitt oder Sinusbogenabschnitt, verwendbar.

Erfindungsgemäß ist im Hohlraum und in den Nuten Klebstoff angeordnet. Von Vorteil ist dabei, dass die Verteilereinheit nach Zuführen des Klebstoffs und insbesondere auch nach Aushärten des Klebstoffs verbleiben kann. Somit muss die Verteilereinheit nicht entfernt werden sondern ist mittels des Klebstoffs stoffschlüssig verbunden mit dem Rotor, insbesondere mit den Nuten am Rotor.

Erfindungsgemäß ist der Außendurchmesser des Wellenabschnitts derart kleiner als der Innendurchmesser der Aufnahmeausnehmung der Nabe, dass ein von mit Klebstoff zumindest teilweise befüllter, zumindest von dem Wellenabschnitt und der Nabe, insbesondere in radialer Richtung und in Umfangsrichtung, begrenzter Klebespalt in Umfangsrichtung benachbarte Nuten verbindet. Von Vorteil ist dabei, dass die Nabe flächenfüllend an der Außenfläche des Wellenabschnitts stoffschlüssig verbindbar ist und die Klebstoff befüllten Nuten miteinander verbunden sind zur Erhöhung der Stabilität und Verminderung der Schwingneigung. Bei geeignet gewählter Nuttiefe kann auch Stoffschluss erreicht werden.

Wichtige Merkmale bei dem Verfahren zum Klebeverbinden einer Nabe mit einer Welle sind, dass eine Verteilereinheit auf einen Wellenabschnitt in Wellenachsrichtung aufgeschoben wird, so dass sie eine auf dem Wellenabschnitt aufgeschobene Nabe an deren Stirnseite berührt, insbesondere mittels einer an der Verteilereinheit ausgeformten Dichtlippe,
wobei danach ein Auslassrohr oder eine Kanüle einer Einspritzvorrichtung eingeführt wird in einen an der Verteilereinheit ausgeformten Einlasskanal, der in einen von zumindest der Verteilereinheit begrenzten Hohlraum mündet, in welchen auch an der Nabe ausgebildete, sich axial erstreckende, von Nabe und Wellenabschnitt, insbesondere in radialer und/oder Umfangsrichtung, begrenzte Nuten münden,
insbesondere wobei die Nuten in Umfangsrichtung regelmäßig voneinander beabstandet sind und/oder wobei die Nuten eine kleinere Querschnittsfläche aufweisen als der Hohlraum im Radialschnitt, insbesondere wobei der Hohlraum ringförmig ausgebildet ist.

Von Vorteil ist dabei, dass die Nabe mit der Welle stoffschlüssig verbunden ist und zwar derart, dass beim Verbinden der Nabe mit der Welle keine wesentlichen Kräfte wirken. Somit ist die Nabe als Blechpaket ausführbar, welches aus dünnen, leicht verformbaren Einzelblechteilen besteht, und wird trotzdem nicht verformt bei Herstellen der Verbindung.

Wichtige Merkmale bei der Verwendung eines Klebespalts als Zentrierhilfe beim Klebeverbinden einer Nabe mit einer Welle,
insbesondere bei einer vorgenannten Anordnung beziehungsweise bei einem vorgenannten Verfahren, sind, dass der Klebespalt durch eine Durchmesserdifferenz zwischen **Innendurchmesser einer Nabe und Außendurchmesser desjenigen Wellenabschnitts erzeugt ist, auf dem die Nabe mittels Klebstoff stoffschlüssig verbunden ist,**
**insbesondere wobei am Blechpaket sich axial erstreckende, mit dem Klebespalt verbundene Nuten angeordnet sind.** Von Vorteil ist dabei, dass der Klebstoff die Zentrierung der Nabe, also des Blechpakets, ausführt, solange er noch flüssig ist. Nach dem Zentrieren härtet der Klebstoff aus und die Lage des Blechpakets ist somit fixiert. Weitere Vorteile ergeben sich aus den Unteransprüchen.

Die Erfindung wird nun anhand von Abbildungen näher erläutert:

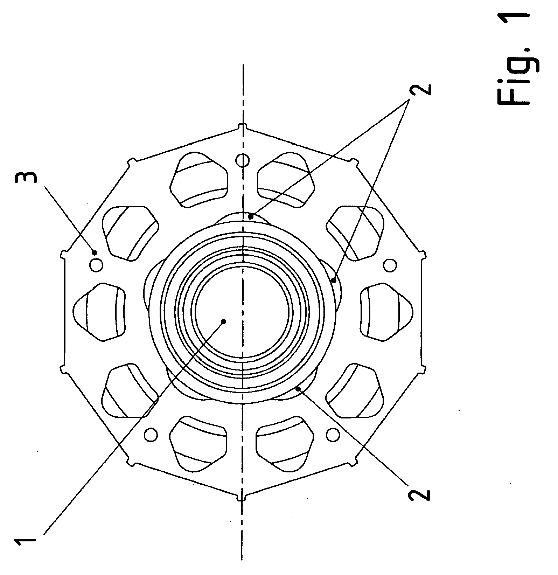

In der Figur 1 ist ein Querschnitt durch den erfindungsgemäßen Rotor eines Synchronmotors gezeigt.

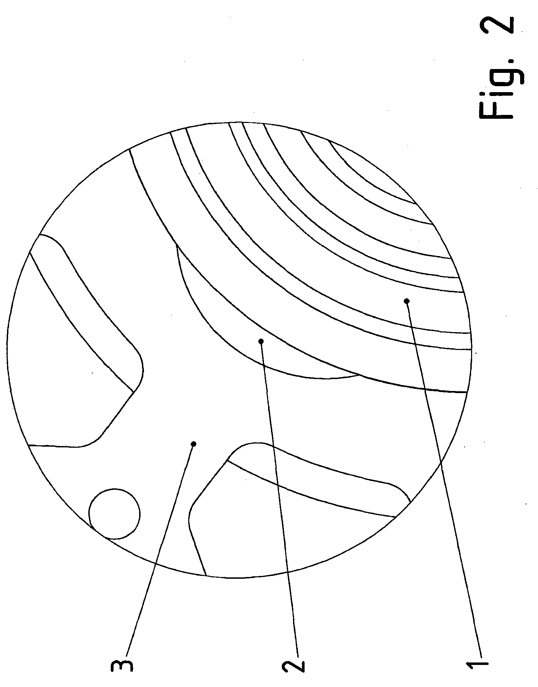

In der Figur 2 ist ein vergrößerter Ausschnitt hiervon gezeigt.

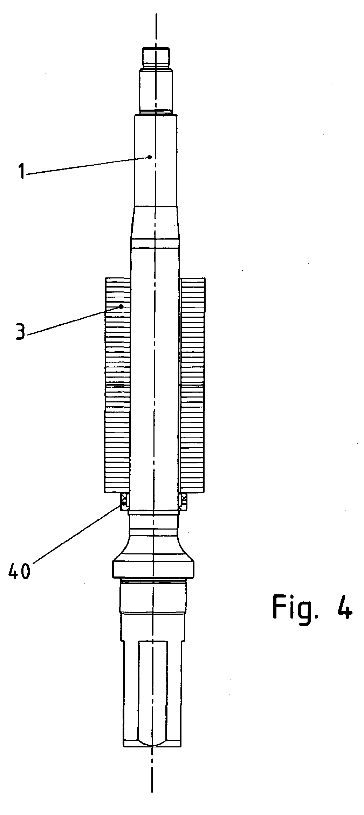

In der Figur 4 ist ein Längsschnitt durch den Rotor gezeigt.

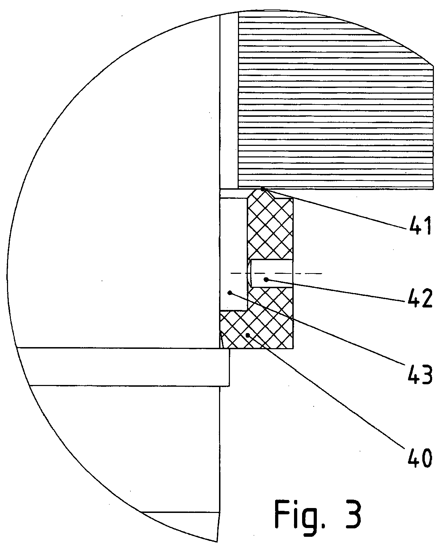

In der Figur 3 ist ein vergrößerter Ausschnitt hiervon gezeigt.

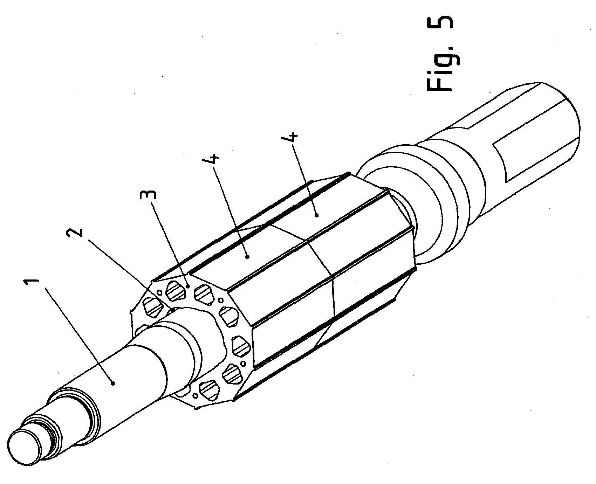

In der Figur 5 ist eine Schrägansicht des Rotors gezeigt.

Dabei weist der Rotor eine Rotorwelle 1 auf, auf welche ein Blechpaket 3 in axialer Richtung aufgeschoben angeordnet ist. Das Blechpaket 3 besteht aus einem Stapel von Einzelblechstücken, welche in axialer Richtung hintereinander gestapelt angeordnet sind. Die Einzelblechstücke sind stanzpaketiert und/oder verschweißt oder nur lose zusammengesetzt.

Das Blechpaket wird mittels einer zumindest stoffschlüssigen Welle-Nabe-Verbindung mit der Rotorwelle verbunden. Zur Verbindung des Blechpakets 3 mit der Rotorwelle 1 ist eine Klebeverbindung vorgesehen. Diese Klebeverbindung bewirkt zusätzlich ein Klebeverbinden der Einzelblechstücke untereinander.

Für die Klebeverbindung weist das Blechpaket 3 an seinem Innenumfang, also an der der Rotorwelle 1 zugewandten Innenfläche mehrere, in Umfangsrichtung regelmäßig voneinander beabstandete Ausnehmungen 2 auf, die sich in axialer Richtung, also in Rotorachsrichtung erstrecken.

Der Nutquerschnitt ist gerundet, vorzugsweise ist die Nutwandung samt Nutboden einem Kreisbogenabschnitt entsprechend im Querschnitt geformt. Es sind aber auch einem Ellipsenbogenabschnitt oder einem anderen Bogenabschnitt entsprechende Ausführungen verwendbar.

An der Außenseite des Blechpakets sind mehrere in Umfangsrichtung regelmäßig voneinander beabstandete Planflächen 4 ausgebildet, so dass Dauermagnete in einfacher Weise aufklebbar sind, also mit dem Blechpaket 3 klebeverbindbar sind.

Die Nuten erstrecken sich also in axialer Richtung und werden begrenzt von der Rotorfläche und der Nutwandung samt Nutboden. Die Herstellung dieser Nuten ist ohne zusätzlichen Aufwand ermöglicht, da beim Ausstanzen der Einzelblechstücke nur eine entsprechende Außenkontur der Einzelblechstücke vorgesehen werden muss.

Zum Einbringen des Klebstoffs in die Nuten wird eine Verteilereinheit 40 auf die Rotorwelle aufgesteckt und bis ans Blechpaket 3 herangeschoben.

Die vorzugsweise einstückig ausgeführte, insbesondere als Kunststoffspritzgussteil ausgeführte, Verteilereinheit 40 ist aus einem Kunststoff gefertigt und berührt das Blechpaket 3 derart, dass eine druckdichte Verbindung hergestellt ist. Vorzugsweise weist die Verteilereinheit 40 eine Dichtlippe 41 auf, die an die Stirnfläche des Blechpakets angedrückt wird und somit einen von der Verteilereinheit begrenzten Kanalbereich dicht verbindbar macht mit der jeweiligen Nut des Blechpakets 3.

Die Verteilereinheit 40 weist einen ringförmige Ausnehmung auf, so dass ein ringförmiger, als Auslasskanal 43 bezeichenbarer Hohlraum von der Rotorwelle 1 und der Verteilereinheit 40 begrenzt wird. Ein Einlasskanal 42 verbindet diesen Hohlraum mit der Umgebung, insbesondere wobei sich der Einlasskanal 42 in radialer Richtung erstreckt und nur an einem einzigen Positionsbereich in Umfangsrichtung angeordnet ist.

Eine Kanüle oder ein Auslassrohr einer Einspritzvorrichtung, beispielsweise Spritze, ist in den Einlasskanal 42 einführbar und dicht verbindbar, indem eine Presspassung vorgesehen wird. Wenn also die Kanüle beziehungsweise das Auslassrohr in den Einlasskanal 42 eingeführt wird, umschließt also das elastische Material der Verteilereinheit 40 die Kanüle beziehungsweise das Auslassrohr der Einspritzvorrichtung dicht.

Auf diese Weise ist Klebstoff von der Einspritzvorrichtung in den Hohlraum einspritzbar und dabei der Klebstoff mit einem derart hohen Druck beaufschlagbar, dass er in die Nuten strömt. Da die Nuten mit dem ringförmigen Hohlraum verbunden sind, in welchem der Druck beaufschlagt wird, ist eine gleichmäßige Verteilung des Klebstoffs in die Nuten erreicht.

Nach Aushärten des Klebstoffs kann die Verteilereinheit 40 entfernt werden, wobei allerdings der Klebstoff dann im Wesentlichen gehärtet sein könnte und ein erhöhter Aufwand beim Entfernen besteht. Alternativ kann die Verteilereinheit 40 auch auf der Rotorwelle samt dem umschlossenem Klebstoff verbleiben.

Das Aushärten ist entweder mit UV-Licht, Erwärmen der Klebstoffbereiche und/oder Anschmelzen der Verteilereinheit 40 erreichbar.

Die Verteilereinheit 40 ist auch als Dosierring bezeichenbar. Sie ist aus Kunststoff ausgeführt. Die Abdichtung zur Rotorwelle hin erfolgt als Presspassung. Die Abdichtung zum Blechpaket hin erfolgt mittels der Dichtkante beziehungsweise Dichtlippe 41.

Der Querschnitt des ringförmigen Hohlraums weist eine größere Fläche auf als der Querschnitt einer jeweiligen Nut. Somit verteilt sich der Klebstoff nach dem einspritzen zunächst im ringförmigen Hohlraum und danach erst in die Nuten. Da der Strömungswiderstand für den Klebstoff innerhalb des ringförmigen Hohlraums geringer ist als der Strömungswiderstand in einer jeweiligen Nut, verteilt sich der Klebstoff im ringförmigen Hohlraum und ist dort mit im Wesentlichen konstantem Druck beaufschlagt. Erst danach verteilt er sich in die Nuten, in denen er dann aufsteigt bei entsprechender vertikalen Anordnung der Rotorachse.

Vorzugsweise wird zwischen Blechpaket und Rotorwelle ein Klebespalt belassen. Das heißt, dass der Innendurchmesser der Aufnahme größer ist als der Außendurchmesser des Wellenabschnitts, so dass sich ein zylindrischer Spalt bildet, der mit Klebstoff beaufschlagbar ist. Beim Einspritzen des Klebstoffes wird das Blechpaket an der Rotorwelle zentriert, da der Klebespalt in Umfangsrichtung den Wellenabschnitt ganz umgibt. Auf diese Weise wirkt also der Klebespalt als Zentrierhilfe.

Bei weiteren erfindungsgemäßen Ausführungsbeispielen wird das Blechpaket mittels einer nicht nur stoffschlüssigen sondern auch kraftschlüssigen und/oder formschlüssigen Welle-Nabe-Verbindung mit der Rotorwelle verbunden.

Bei weiteren erfindungsgemäßen Ausführungsbeispielen wird auch ein genügend großer Klebespalt zwischen Rotorwelle 1 und Blechpaket 3 vorgesehen. Somit kann bei entsprechend dünnflüssigem Klebstoff dieser auch von dem ringförmigen Hohlraum der Verteilereinheit 40 in den Klebespalt eindringen. Es sind somit sogar weniger Nuten oder gar keine Nuten im Blechpaket notwendig.

Bei weiteren erfindungsgemäßen Ausführungsbeispielen wird ein dickflüssiger und/oder hoch viskoser Klebstoff verwendet, wobei in diesem Fall die Nuten in Umfangsrichtung weit ausgedehnt ausgeführt werden. In Umfangsrichtung verlaufende Stege zwischen den Nuten bewirken die Zentrierung des Blechpakets 3 auf der Rotorwelle 1.

Vorzugsweise wird als hochviskoser Klebstoff ein Epoxidharz-Klebstoff verwendet.

### Bezugszeichenliste

1 Rotorwelle
2 Ausnehmung, sich axial erstreckende Nut mit kreisbogenförmigem Querschnitt
3 Blechpaket
4 Planflächen
40 Verteilereinheit
41 Dichtlippe
42 Einlasskanal
43 Auslasskanal

## Patentansprüche

1. Anordnung mit einer Welle-Nabe-Verbindung, **welche einen stoffschlüssig verbundenen Verteilereinheit umfasst,**
insbesondere wobei die Nabe auf einen zylindrischen Abschnitt der Welle in Wellenachsrichtung aufgeschoben ist,
**wobei die Nabe** in Wellenachsrichtung sich erstreckende Nuten aufweist,
insbesondere so dass die Nuten, insbesondere in radialer Richtung und/oder in Umfangsrichtung, begrenzt sind von einem Wellenabschnitt und dem Blechpaket (3),
wobei eine Verteilereinheit (40) auf den Wellenabschnitt aufgeschoben ist und einen Hohlraum, insbesondere einen ringförmigen Hohlraum, zumindest teilweise begrenzt,
**wobei der Hohlraum durch den Wellenabschnitt, die Stirnseite der Nabe und die Verteilereinheit (40) begrenzt ist,**
wobei die Nuten in den Hohlraum münden,
wobei die Verteilereinheit (40) mit der Nabe dicht verbunden ist,
**wobei die Nuten an ihrem anderen Ende in die Umgebungsluft münden,**
**wobei die Verteilereinheit (40) eine Dichtlippe (41) aufweist, welche zur dichten Verbindung mit der Nabe diese an deren Stirnseite berührt,**
**wobei die Verteilereinheit (40) einen in den Hohlraum mündenden Einlasskanal (42) aufweist, in welchen eine Kanüle oder ein Auslassrohr einer Klebstoff-Einspritzvorrichtung einführbar ist,**
**wobei der Einlasskanal (42) sich in radialer Richtung erstreckt und/oder wobei der Einlasskanal (42) mit seinem anderen Ende in der Umgebung mündet,**
**wobei im Hohlraum und in den Nuten Klebstoff angeordnet ist,**
**wobei der Außendurchmesser des Wellenabschnitts derart kleiner ist als der Innendurchmesser der Aufnahmeausnehmung der Nabe, dass ein von mit Klebstoff zumindest teilweise befüllter, zumindest von dem Wellenabschnitt und der Nabe, insbesondere in radialer Richtung und in Umfangsrichtung, begrenzter Klebespalt in Umfangsrichtung benachbarte Nuten verbindet.**

2. Anordnung nach Anspruch 1,
**dadurch gekennzeichnet, dass**
die Nabe ein Blechpaket (3) ist, insbesondere ein in Wellenachsrichtung paketiertes, insbesondere aus Einzelblechstücken zusammengesetztes, stanzpaketiertes, schweißverbundenes oder formschlüssig verbundenes, Blechpaket (3).

3. Anordnung nach mindestens einem der vorangegangenen Ansprüche,
**dadurch gekennzeichnet, dass**
**die Verteilereinheit (40) aus einem derart elastischen Material gefertigt ist, so dass sich das elastische Material an die eingeführte Kanüle oder das eingeführte Auslassrohr anlehnt und somit abdichtet**
**und/oder dass die Kanüle oder das ein Auslassrohr einer Klebstoff-Einspritzvorrichtung kraftschlüssig dicht verbunden eingeführt ist in den Einlasskanal (42).**

4. Anordnung nach mindestens einem der vorangegangenen Ansprüche,
**dadurch gekennzeichnet, dass**
die Verteilereinheit (40) aus einem thermoplastischen Elastomer gefertigt ist.

5. Anordnung nach mindestens einem der vorangegangenen Ansprüche,
**dadurch gekennzeichnet, dass**
die Welle eine Rotorwelle (1) ist.

6. Anordnung nach mindestens einem der vorangegangenen Ansprüche,
**dadurch gekennzeichnet, dass**
das Blechpaket (3) an seinem Umfang ebene oder bogenförmig verlaufende Flächenabschnitte aufweist, an denen Dauermagnete angeordnet sind, insbesondere stoffschlüssig und/oder formschlüssig mit dem Blechpaket (3) verbundene Dauermagnete.

7. Anordnung nach mindestens einem der vorangegangenen Ansprüche,
**dadurch gekennzeichnet, dass**
die Nuten einen kreisbogenförmigen Querschnitt aufweisen.

8. Verfahren zum Klebeverbinden einer Nabe mit einer Welle **bei einer Anordnung nach mindestens einem der vorangegangenen Ansprüche,**
**dadurch gekennzeichnet, dass**
eine Verteilereinheit (40) auf einen Wellenabschnitt in Wellenachsrichtung aufgeschoben wird, so dass sie eine auf dem Wellenabschnitt aufgeschobene Nabe an deren Stirnseite berührt, insbesondere mittels einer an der Verteilereinheit (40) ausgeformten Dichtlippe (41),
wobei danach ein Auslassrohr oder eine Kanüle einer Einspritzvorrichtung eingeführt wird in einen an der Verteilereinheit (40) ausgeformten Einlasskanal (42), der in einen von zumindest der Verteilereinheit (40) begrenzten Hohlraum mündet, in welchen auch an der Nabe ausgebildete, sich axial erstreckende, von Nabe und Wellenabschnitt, insbesondere in radialer und/oder Umfangsrichtung, begrenzte Nuten münden,
insbesondere wobei die Nuten in Umfangsrichtung regelmäßig voneinander beabstandet sind und/oder wobei die Nuten eine kleinere Querschnittsfläche aufweisen als der Hohlraum im Radialschnitt, insbesondere wobei der Hohlraum ringförmig ausgebildet ist.

9. Verfahren nach mindestens einem der vorangegangenen Anspruch 8,
**dadurch gekennzeichnet, dass**
zwischen Nabe und Wellenabschnitt ein zylindrischer Klebespalt angeordnet ist, der als Zentrierhilfe fungiert.

10. Verwendung eines Klebespalts als Zentrierhilfe beim Klebeverbinden einer Nabe mit einer Welle,
**bei einer Anordnung beziehungsweise bei einem Verfahren nach mindestens einem der vorangegangenen Ansprüche,**
**wobei der Klebespalt durch eine Durchmesserdifferenz zwischen Innendurchmesser einer Nabe und Außendurchmesser desjenigen Wellenabschnitts erzeugt ist, auf dem die Nabe mittels Klebstoff stoffschlüssig verbunden ist,**
**insbesondere wobei am Blechpaket (3) sich axial erstreckende, mit dem Klebespalt verbundene Nuten angeordnet sind.**

## Claims

1. Arrangement with a shaft-hub connection which comprises a distributor unit connected in a material-locking manner,
in particular wherein the hub is pushed onto a cylindrical portion of the shaft in the shaft axial direction,
wherein the hub has grooves extending in the shaft axial direction,
in particular so that the grooves are delimited, in particular in the radial direction and/or in the circumferential direction, by a shaft portion and the laminated core (3),
wherein a distributor unit (40) is pushed onto the shaft portion and at least partly delimits a cavity, in particular an annular cavity,
wherein the cavity is delimited by the shaft portion, the end side of the hub and the distributor unit (40),
wherein the grooves open into the cavity,
wherein the distributor unit (40) is sealingly connected to the hub,
wherein the grooves open at their other end into the surrounding air,
wherein the distributor unit (40) has a sealing lip (41) which, for the sealing connection to the hub, contacts the latter at the end side thereof,
wherein the distributor unit (40) has an inlet channel (42) which opens into the cavity and into which channel a cannula or an outlet pipe of an adhesive-injecting device is insertable,
wherein the inlet channel (42) extends in the radial direction and/or wherein the inlet channel (42) opens, with its other end, into the surroundings,
wherein adhesive is arranged in the cavity and in the grooves, wherein the outer diameter of the shaft portion is less than the inner diameter of the receiving recess of the hub to such an extent that an adhesive gap which is at least partly filled with adhesive and is delimited at least by the shaft portion and the hub, in particular in the radial direction and in the circumferential direction, connects grooves adjacent in the circumferential direction.

2. Arrangement according to Claim 1,
**characterised in that**
the hub is a laminated core (3), in particular a laminated core (3) stacked in the shaft axial direction, in particular composed of individual laminations, stamped and stacked, connected by welding or connected by form-locking.

3. Arrangement according to at least one of the preceding claims,
**characterised in that**
the distributor unit (40) is produced from a material of such elasticity that the elastic material leans against and thus seals off the inserted cannula or the inserted outlet pipe and/or **in that** the cannula or the outlet pipe of an adhesive-injecting device is inserted into the inlet channel (42) in a force-locking sealingly connected manner.

4. Arrangement according to at least one of the preceding claims,
**characterised in that**
the distributor unit (40) is produced from a thermoplastic elastomer.

5. Arrangement according to at least one of the preceding claims,
**characterised in that**
the shaft is a rotor shaft (1).

6. Arrangement according to at least one of the preceding claims,
**characterised in that**
the laminated core (3) has, at its circumference, plane or arcuately extending surface portions on which permanent magnets are arranged, in particular permanent magnets connected to the laminated core (3) in a material-locking and/or form-locking manner.

7. Arrangement according to at least one of the preceding claims,
**characterised in that**
the grooves have a circular-arc-shaped cross-section.

8. Method for adhesive bonding of a hub to a shaft in an arrangement according to at least one of the preceding claims,
**characterised in that**
a distributor unit (40) is pushed onto a shaft portion in the shaft axial direction, so that it contacts a hub, pushed onto the shaft portion, at the end side of the hub, in particular by means of a sealing lip (41) formed on the distributor unit (40),
wherein thereafter an outlet pipe or a cannula of an injecting device is inserted into an inlet channel (42) formed on the distributor unit (40), which channel opens into a cavity delimited by at least the distributor unit (40), opening into which cavity are also grooves which are formed on the hub, extend axially, and are delimited by the hub and the shaft portion, in particular in the radial and/or circumferential direction,
in particular wherein the grooves are regularly spaced from one another in the circumferential direction and/or wherein the grooves have a smaller cross-sectional area than the cavity in the radial section, in particular wherein the cavity is of annular form.

9. Method according to at least one of the preceding Claim 8,
**characterised in that**
a cylindrical adhesive gap is arranged between the hub and the shaft portion, which gap acts as a centring aid.

10. Use of an adhesive gap as a centring aid in the adhesive bonding of a hub to a shaft,
in an arrangement or in a method according to at least one of the preceding claims,
wherein the adhesive gap is produced by a difference in diameter between the inner diameter of a hub and the outer diameter of that shaft portion on which the hub is connected by means of adhesive in a material-locking manner,
in particular wherein axially extending grooves connected to the adhesive gap are arranged on the laminated core (3).

## Revendications

1. Agencement avec une liaison arbre-moyeu, qui comprend une unité de répartition reliée par liaison de matière,
sachant notamment que le moyeu est enfilé dans la direction axiale de l'arbre sur une partie cylindrique de l'arbre,
sachant que le moyeu présente des rainures s'étendant dans la direction axiale de l'arbre, en particulier de telle sorte que les rainures sont délimitées, en particulier en direction radiale et/ou en direction périphérique, par une partie d'arbre et par l'empilage (3) de tôles,
sachant qu'une unité de répartition (40) est enfilée sur la partie d'arbre et délimite au moins en partie une cavité, en particulier une cavité annulaire,
sachant que la cavité est délimitée par la partie d'arbre, le côté frontal du moyeu, et l'unité de répartition (40),
sachant que les rainures débouchent dans la cavité,
sachant que l'unité de répartition (40) est reliée en étanchéité au moyeu,
sachant que les rainures débouchent à leur autre extrémité dans l'air ambiant,
sachant que l'unité de répartition (40) présente une lèvre d'étanchéité (41) qui, pour la liaison étanche avec le moyeu, entre en contact avec le moyeu sur le côté frontal de ce dernier,
sachant que l'unité de répartition (40) présente un canal d'admission (42) débouchant dans la cavité, canal dans lequel peut être introduit(e) une canule ou un tube de sortie d'un dispositif d'injection de produit adhésif,
sachant que le canal d'admission (42) s'étend en direction radiale et/ou sachant que le canal d'admission (42) débouche par son autre extrémité dans l'environnement,
sachant que du produit adhésif est disposé dans la cavité et dans les rainures,
sachant que le diamètre extérieur de la partie d'arbre est inférieur au diamètre intérieur de l'évidement récepteur du moyeu dans une mesure telle qu'un interstice de collage, au moins partiellement rempli de produit adhésif et délimité, en particulier en direction radiale et en direction périphérique, au moins par la partie d'arbre et le moyeu, relie des rainures voisines en direction périphérique.

2. Agencement selon la revendication 1, **caractérisé en ce que** le moyeu est un empilage (3) de tôles, en particulier un empilage (3) de tôles composé notamment de pièces de tôle individuelles, reliées par boutonnage, par soudage ou par liaison positive et empilées dans la direction axiale de l'arbre.

3. Agencement selon au moins une des revendications précédentes, **caractérisé en ce que** l'unité de répartition (40) est fabriquée en un matériau d'une élasticité telle que le matériau élastique épouse la forme de la canule introduite ou du tube de sortie introduit et assure ainsi son étanchéité,
et/ou **en ce que** la canule ou le tube de sortie d'un dispositif d'injection de produit adhésif est introduit dans le canal d'admission (42) en lui étant relié en étanchéité à force.

4. Agencement selon au moins une des revendications précédentes, **caractérisé en ce que** l'unité de répartition (40) est fabriquée en un élastomère thermoplastique.

5. Agencement selon au moins une des revendications précédentes, **caractérisé en ce que** l'arbre est un arbre de rotor (1).

6. Agencement selon au moins une des revendications précédentes, **caractérisé en ce que** l'empilage (3) de tôles présente sur sa périphérie des parties de surface à allure plane ou courbe, sur lesquelles sont disposés des aimants permanents, en particulier des aimants permanents reliés à l'empilage (3) de tôles par liaison de matière et/ou par liaison positive.

7. Agencement selon au moins une des revendications précédentes, **caractérisé en ce que** les rainures présentent une section en arc de cercle.

8. Procédé pour la liaison par collage d'un moyeu et d'un arbre avec un agencement selon au moins une des revendications précédentes,
**caractérisé en ce qu'**on enfile une unité de répartition (40) sur une partie d'arbre dans la direction axiale de l'arbre, de sorte qu'elle entre en contact, avec un moyeu enfilé sur la partie d'arbre, sur le côté frontal de celui-ci, en particulier au moyen d'une lèvre d'étanchéité (41) formée sur l'unité de répartition (40),
sachant qu'on introduit ensuite un tube de sortie ou une canule d'un dispositif d'injection dans un canal d'admission (42) formé sur l'unité de répartition (40), canal qui débouche dans une cavité délimitée au moins par l'unité de répartition (40), cavité dans laquelle débouchent également des rainures formées sur le moyeu, s'étendant axialement et délimitées, en particulier en direction radiale et/ou en direction périphérique, par le moyeu et par la partie d'arbre,
sachant en particulier que les rainures sont régulièrement espacées les unes des autres en direction périphérique,
et/ou sachant que les rainures présentent une plus petite superficie de section que la cavité en coupe radiale, sachant en particulier que la cavité est réalisée annulaire.

9. Procédé selon au moins la revendication précédente 8, **caractérisé en ce qu'**un interstice de collage cylindrique, qui joue le rôle d'aide au centrage, est disposé entre le moyeu et la partie d'arbre.

10. Utilisation d'un interstice de collage comme aide au centrage lors de la liaison par collage d'un moyeu et d'un arbre,
avec un agencement ou encore avec un procédé selon au moins une des revendications précédentes,
sachant que l'interstice de collage est produit par une différence de diamètre entre le diamètre intérieur d'un moyeu et le diamètre extérieur de la partie d'arbre sur laquelle le moyeu est relié par liaison de matière au moyen d'un produit adhésif,
sachant en particulier que des rainures s'étendant axialement, reliées à l'interstice de collage, sont disposées sur l'empilage (3) de tôles.
